# EUROPEAN PATENT SPECIFICATION

(11) **EP 2 543 044 B1**
(45) Date of publication and mention of the grant of the patent: **15.08.2018**
(21) Application number: 11717051.4
(22) Date of filing: 23.02.2011
(51) Int. Cl.: G21C 7/10, G21C 19/40, C04B 37/00, B22F 7/00, B32B 15/04, C23C 12/00, C23C 24/08, C22C 1/05

(54) **A NEUTRON ABSORBING COMPONENT AND A METHOD FOR PRODUCING OF A NEUTRON ABSORBING COMPONENT**
ABSORPTIONSELEMENT ZUR ABSORPTION VON NEUTRONEN SOWIE VERFAHREN ZUR HERSTELLUNG DES ABSORPTIONSELEMENTS
DISPOSITIF ABSORBANT LES NEUTRONS ET PROCÉDÉ DE FABRICATION D'UN TEL DISPOSITIF

(30) Priority: 01.03.2010 SE 1050187
(43) Date of publication of application: 09.01.2013
(73) Proprietor: Westinghouse Electric Sweden AB, 721 63 Västerås (SE)
(72) Inventor: HALLSTADIUS, Lars, 725 92 Västerås (SE); BACKMAN, Karin, 722 46 Västerås (SE); REBENSDORFF, Björn, 722 10 Västerås (SE); WIDEGREN, Hans, 723 41 Västerås (SE)
(74) Representative: Bjerkéns Patentbyrå KB (Stockholm)
(86) International application number: PCT/SE2011/050202
(87) International publication number: WO 2011/108973

(56) References cited:
- EP-A1- 1 249 844
- WO-A1-98/53940
- DE-A1- 19 834 216
- GB-A- 2 115 212
- JP-A- 4 187 739
- JP-A- 11 012 758
- JP-A- 11 292 648
- JP-A- 62 263 979
- US-A- 4 745 033
- US-A- 5 268 235
- US-A- 5 279 909
- US-A1- 2004 195 296
- DATABASE WPI Week 198640 Thomson Scientific, London, GB; AN 1986-262636 XP002647103, -& JP 61 191575 A (IBIDEN CO LTD) 26 August 1986 (1986-08-26)
- DATABASE WPI Week 198227 Thomson Scientific, London, GB; AN 1982-56583E XP002647104, -& SU 735 101 A1 (IOFFE PHYS TECH INST) 15 December 1981 (1981-12-15)
- DATABASE WPI Week 197339 Thomson Scientific, London, GB; AN 1973-57469U XP002647105, & SU 364 674 A1 (DONETS FERROUS METALLURG) 28 December 1972 (1972-12-28)

## Description

### FIELD OF THE INVENTION

The present invention relates to a neutron absorbing component according to the preamble of claim 1, see JP-62263979. The present invention also relates to a method for manufacturing of a neutron absorbing component, comprising a core consisting of a first material, a layer consisting of a second material, wherein the layer at least partly encloses the core and is adapted to protect the core from an outer surrounding, wherein the first material has a higher neutron absorption capability than the second material.

### PRIOR ART

In fission reactors different types of neutron absorbing components are used to control the reactivity in the reactor. The components can be used during operation of reactor for adjusting the reactivity, wherein an adjustment of the power of the reactor is obtained. This type of adjustment can for example be found in boiling water reactors. Neutron absorbing components can also be used for terminating the chain reaction that creates the neutrons that maintain a fission process, wherein the criticality of the fission process ceases and the reactor is shut down. Components for this type of termination of the fission process, so called control rods, are for example found in boiling water reactors and pressurized water reactors. Neutron absorbing components can moreover be used for assuring that nuclear materials maintain their non-critical status, for example during transport of nuclear fuel.

Neutron absorbing components are often used in an outer surrounding, such as the reactive environment in a fission reactor. The outer environment can comprise substances that are chemically aggressive at high temperatures and pressures. The outer surrounding around the neutron absorbing components can for example be the moderator and cooling medium, which comprises light water in pressurized and boiling water reactors. The aggressive substances can react with the neutron absorbing substance in the neutron absorbing components. Thereby, the component's absorbing function can deteriorate. Furthermore, the outer surrounding in the reactor around the neutron absorbing components can be contaminated by the neutron absorbing substance, and/or by substances in gaseous state formed during neutron absorption in the neutron absorbing component. The contamination of the outer surrounding can result in uncertainty and/or unbalance in the reactivity of the reactor. In case of influence on the neutron absorbing components, it may be necessary to shut down the reactor and replace the components, and to decontaminate the outer surrounding of the reactor from the neutron absorbing substance or substances in gaseous state formed during neutron absorption. This results in great losses in form of lacking energy production at the operational shut down and cost for replacing the neutron absorbing components.

At transports of nuclear materials, such as nuclear fuel elements, it is of highest importance that material maintains its non-critical status. One example of transports of nuclear materials is transport of nuclear fuel elements. Non-radiated nuclear fuel elements are transported from the nuclear fuel manufacturer to the nuclear fission reactors in for it intended transport containers that comprise neutron absorbing components. In the event of an unlikely situation where the containers are subjected to high temperatures, it is important that the function of neutron absorbing components and their position in the transport containers are maintained.

A technique for treatment of burned out nuclear fuel for further deposition is disclosed in EP-1249844. In the document the burned out nuclear fuel is treated with powder of aluminium and boron that is pressed by Cold Isostatic Pressing (CIP) and then sintered together by means of plasma sintering.

### SUMMARY OF THE INVENTION

The object of the present invention is to provide a neutron absorbing component with improved properties.

This object is achieved with the initially defined component that comprises the features that are defined in the characterizing portion of claim 1.

The neutron absorbing component achieves the above mentioned object by means of the intermediate layer between the core and the layer. The intermediate layer comprises or consists of a mixture of the first material and the second material.

The intermediate layer, which can be obtained in conjunction with manufacturing of the component by sintering, is a layer between the core and the layer that provides a transition of the properties from the first material to the second material. The intermediate layer comprises a stepwise or gradual transition of the concentration of the first and the second material. The intermediate layer has a material gradient, which means that the concentration of the first material and the second material in the intermediate layer is greater than zero. The material gradient involves a concentration change in comparison with the core and in comparison with the layer. The material gradient can comprise a homogenous mixture of the first and the second material. The material gradient can also comprise a change within the intermediate layer of the proportion between the concentration of the first and the second material. Thereby, the material gradient can be adjusted based on the material properties, for example with regard to temperature expansion, of the first and the second material in order to obtain good material properties of the component. By means of the material gradient, a transition is formed between the first material in the core and the second material in the layer, which provides a strong adhesion between the layer and the core. The material gradient in the intermediate layer results in a reduction of inner stresses in the component formed due to thermal and elastic differences between the first and the second material. Thereby, an improved adhesion of the layer to the core arises which provides an improved functionality to the components.

The component is manufactured by means of a suitable sintering method that provides the component with a high sintering together of the first material with the second material. The sintering method can involve or be combined with an applied pressure and/or an elevated temperature. The sintering method shall assure that a plurality of material properties, such as grain size and porosity, of the sintered component can be controlled within a wide range.

With the neutron absorbing component, a component is intended that is adapted to control the reactivity and criticality of nuclear material. The neutron absorbing component has ability to capture neutrons. When the neutron absorbing component captures neutrons, it reduces the ratio between present and formed neutrons, and thereby the reactivity, for example in a fission reactor is reduced. The neutron absorbing component can for example be used for adjusting or terminating the reactivity in fission reactors. Furthermore, the neutron absorbing component can assure subcritical status of the nuclear material.

The core of the neutron absorbing component consists of the first material. The first material has a higher neutron absorbing capability than the second material. The neutron absorbing component's ability to affect the reactivity in fission reactors is mainly due to the neutron absorbing capability of the core.

The layer of a neutron absorbing component is adapted to protect the core from an outer surrounding. The layer consists of the second material, which has properties that are suitable for protecting the core of the component.

The outer surrounding can be of different types depending on the field of use. For example in a fission reactor, the outer surrounding comprises mainly a moderating and a cooling medium. In a use for assuring of subcritical status the outer surrounding can for example comprise air or concrete. During reactor operation a reactive environment is formed that affects among other things the neutron absorbing components in the reactor. By means of the protecting function of the layer, it is assured that the core of the component is not affected by the outer surrounding, such as the environment in a fission reactor. Since the layer protects the core from the outer surrounding influence of the functionality of a neutron absorbing component is avoided. The protection of the core also results in the outer surrounding, for example the moderator of a light water fission reactor, not being contaminated by the first material or by substances in gaseous state formed in the core of the the neutron absorbing component. By preventing the outer surrounding from being contaminated, uncertainty in the reactivity of the reactor is avoided. Thereby, the control and the surveillance of the reactor can be performed accurately and reliably. The layer can also protect the neutron absorbing component from being affected in the case of an unlikely situation with very high temperatures, for example at during transport. Thereby, the maintenance of the components neutron absorbing function and its position can be assured.

With the neutron absorption capability of a material it is to be understood to which degree the material has capability to capture neutrons. The neutron absorption capability of a material varies with the neutron energy spectrum, and different materials have at different neutron energies so called resonance peaks in the neutron absorption cross-section, where a very high neutron absorption capability is obtained. With neutron absorption capability is to be understood, in this context, the capability of a material to, over a suitable neutron spectrum for a fission reactor, capture neutrons, and thereby reducing the reactivity of the reactor. An example of a measure that reflects a material's neutron absorption capability in a fission reactor is Equivalent Boron Concentration (EBC), where a value close to one comprises a material with high neutron absorption capability and a value close to zero comprises a material with low neutron absorption capability.

According to the invention, the neutron absorbing component is adapted to be used in fission reactors. Thereby, the properties of the component, that are provided by the core, the layer and the intermediate layers, are arranged to be used under the condition and environments that are present in fission reactors, for example in boiling water- and pressure water reactors.

According to an embodiment of the invention, the material gradient comprises a successive decrease of the concentration of the first material from the core to the layer and a successive increase of the concentration of a second material from the core to the layer. Thereby, the material gradient is arranged to provide a gradual transition of a property from the first material to the second material, and vice versa.

According to an embodiment of the invention, the layer of a neutron absorbing component is essentially impermeable to substances in gaseous state, at least helium. Since the layer is essentially impermeable, substances in gaseous state that is formed when capturing neutrons in the first material can be maintained within the interior of the neutron absorbing component. Thereby, no contamination of the outer surrounding with substances in gaseous state formed in the neutron absorbing component occurs.

According to an embodiment of the invention, the layer of a neutron absorbing component is essentially corrosion resistant in an environment of a fission reactor. With essentially corrosion resistant is to be understood that the layer is chemically inert, or essentially chemically inert, and that its protecting effect thereby is maintained when exposed to the outer surrounding in a fission reactor. By the corrosion resistance of the layer, the core of the neutron absorbing component is protected from being affected by the outer surrounding. Thereby, the integrity and function of the neutron absorbing component is assured.

According to an embodiment of the invention, the pore volume of the porosity in the layer of the neutron absorbing component is considerable less than the pore volume of the porosity in the core. The porosity of the core is used for at least partly maintaining formed gases within the grains of the material structure. By means of the lower porosity of the layer, desirable material properties of the layer are achieved, such as a high density, which provides the layer with a separating effect that protects the core from the outer surrounding and prevents substance in gaseous state formed in the core from escaping from the neutron absorbing component. Thereby the integrity and function of the neutron absorbing component are assured, and the risk that the outer surrounding is contaminated by the first material or by substance in gaseous state formed in the core is reduced.

According to an embodiment of the invention, the layer of the neutron absorbing component comprises at least one of a metallic material and a ceramic material. Certain materials from these groups possess properties that are particularly suitable in reactor environment. For example, certain ceramic materials, such as SiC, have a high corrosion resistance, a high hardness and are resistant to heat. For example, certain metallic materials, such as Zr, have a high corrosion resistance and good mechanical properties.

According to an embodiment of the invention, the layer of the neutron absorbing component consists of at least a substance chosen from the group Ti, Zr, Al, Fe, Cr, Ni, SiC, SiN, ZrO₂, Al₂O₃, mixture thereof, and of possible balance. Substances from this group have properties that are preferable for the layer of the neutron absorbing component

According to an embodiment of the invention, the core of the neutron absorbing component consists of a substance chosen from the group Hf, B, In, Cd, Hg, Ag, Gd, Er, BₓC_{y}, BₓN_{y}, BₓO_{y}, mixture thereof, and of possible balance. Substances from this group have properties that are preferable for the core of the neutron absorbing component. Within the framework of the invention, it is possible to combine any of these substances of the core with any of the above mentioned substances of the layer, for example a layer of SiC and a core of BₓC_{y}, such as B₄C.

According to an embodiment of the invention, the neutron absorbing component is intended to be located in a control rod, wherein the layer completely encloses the core. By filling the control rod with one or more neutron absorbing components, the core of which is completely enclosed and protected by the layer, the control rod is given the improved properties of the neutron absorbing component.

Advantageously, the component constitutes at least a part of a control rod intended for controlling the reactivity in a fission reactor. Thereby, the control rod can be composed of one or more neutron absorbing components in different configurations. The control rod is thereby adapted for use in different types of reactors.

According to a further embodiment of the invention, the control rod is configured to be used in a light water reactor of the type boiling water reactor. Advantageously, the control rod is constructed of at least a sheet formed neutron absorbing component.

According to a further embodiment of the invention, the control rod is configured to be used in a light water reactor of the type pressurized water reactor. Advantageously, the control rod can be constructed of at least a cylinder formed neutron absorbing component.

An object of the present invention is also to provide a method for manufacturing of a neutron absorbing component.

This object is achieved by means of the method defined in claim 14. Such a method comprises feeding of the first material and the second material to a space of a tool in such a way that second material at least partly encloses the first material, thereafter sintering together the first and the second material to the neutron absorbing component, wherein the intermediate layer between the core and the layer is formed, and wherein the intermediate layer has a material gradient.

The tool for the method comprises a tool part with a space adapted to be fed with material for sintering. Possibly a pressure and/or an elevated temperature can be applied for increasing the densification during the sintering method.

According to the invention, the neutron absorbing component is adapted to be used in fission reactors.

According to the invention, the material gradient comprises a successive decrease of the concentration of the first materiel from the core to the layer and a successive increase of the concentration of the second material from the core to the layer.

According to the invention, an intermediate zone is formed between an inner part of the space and an outer part of the space at the feeding of the first material and the second material, and wherein the intermediate zone comprises a decrease of the concentration of the first material from the inner part of the space to the outer part of the space and an increase of a concentration of the second material from the inner part of the space to the outer part of the space. The intermediate zone is located in an intermediate part of the space between the inner part of the space and an outer part of the space, and consists of the first material and the second material. The intermediate zone comprises a material gradient, which results in that the first and the second material being stepwise or gradually transferred into each other. When the materials have been fed to the space the first material and the second material are joined together by sintering in such a way that the layer, the core and the intermediate layer are formed.

According to an embodiment of the invention, the space is vibrated in such a way that the first material and the second material are brought together and form the intermediate zone. The space is vibrated after that the first material and the second material have been fed to the space but before the sintering. Thereby, a material gradient of the first material and the second material arises between the inner part of the space and the outer part of the space.

According to the invention, the first material is fed in powder form. With a material in powder form is to be understood a material in solid state comprising a large number of particles with small particle size. The powder can possible also be free flowing, which means that the powder is easily deformed when it is subjected to mechanical stresses. Thereby, the powder can fill out the space of the tool for the sintering. By using a material in powder form, the method is facilitated when the intermediate zone is formed.

According to the invention, the second material is fed in powder form.

According to an embodiment of the invention, the space is divided by an inner pipe that comprises the inner part, wherein the space is divided by an outer pipe that comprises the outer part, wherein an intermediate part is formed between the outer pipe and the inner pipe and wherein the intermediate part is fed with a mixture of the first material and the second material for creating the intermediate zone. The inner part is adapted to be fed with the first material that after sintering forms of the core of the neutron absorbing component. The outer part is adapted to be fed with the second material that after sintering forms the layer of the neutron absorbing component. The intermediate part forms after sintering the intermediate layer of the neutron absorbing component.

The material in the intermediate part forms after sintering the intermediate layer of the neutron absorbing component.

According to an embodiment of the invention, the intermediate part is divided into divisions of at least an intermediate pipe, wherein the divisions are fed with mixtures of different proportion between the concentration of the first material and the second material. By dividing the intermediate part of the space in two or more divisions, the composition of the first and the second material in the divisions is arranged so that the intermediate layer formed after sintering receives a material gradient that provides a good adhesion of the layer to the core.

### BRIEF DESCRIPTION OF THE DRAWINGS

The invention will now be explained more closely by a description of different embodiments of the invention and with reference to the appended drawings.
- Fig. 1: discloses a cross-section of a neutron absorbing component according to an embodiment of the invention in a view seen from the side.
- Figs. 2: to 5 disclose diagrams with different examples of material concentration of a cross-section of a neutron absorbing component.
- Fig. 6: discloses a perspective view of an example of a control rod in a boiling water reactor.
- Fig. 7: discloses a perspective view of an example of a control rod in a pressurized water reactor.
- Fig. 8: discloses a cross-section of a tool for feeding material for sintering.

### DETAILED DESCRIPTION OF PREFERRED EMBODIMENTS OF THE INVENTION

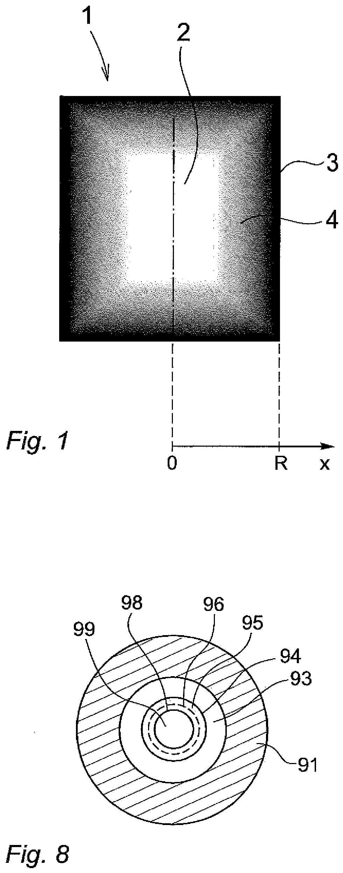

Figure 1 discloses an example of a neutron absorbing component 1, in the following denoted the component, according to an embodiment of the invention in a cross section view seen from the side. The component 1 in figure 1 has a cylindrical form, with a centre of the base of the cylinder in 0 and the envelope surface of the cylinder at R, along an x-axis. Also other forms of the component 1 are possible, such as rectangular, square, spherical, etc.

The component 1 comprises a core 2 consisting of a first material and a layer 3 consisting of a second material. The core 2 of the component comprises a neutron absorbing material arranged to absorb neutrons, for example with the purpose of controlling the reactivity in a fission reactor, such as boiling water reactors and pressurized water reactors. The layer 3 of the component encloses, in the example disclosed in figure 1, completely the core 2 and protects the core 2 from an outer surrounding. The layer 3 comprises the second material that possesses protective properties, such as corrosion resistance and impermeability to substance in gaseous states. The component 1 is manufactured by means of sintering in such a way that an intermediate layer 4 is formed between the core 2 and the layer 3. The intermediate layer 4 comprises both the first material and the second material. The intermediate layer 4 has a material gradient, which comprises a decrease of the concentration of the first material from the core 2 to the layer 3 and an increase of the concentration of the second material from the core 2 to the layer 3. The intermediate layer 4 forms a transition between the core 2 and the layer 3, so that the material properties of the first material are transferred into the properties of the second material, and vice versa. Thereby a good adhesion between the core 2 and the layer 3 is obtained.

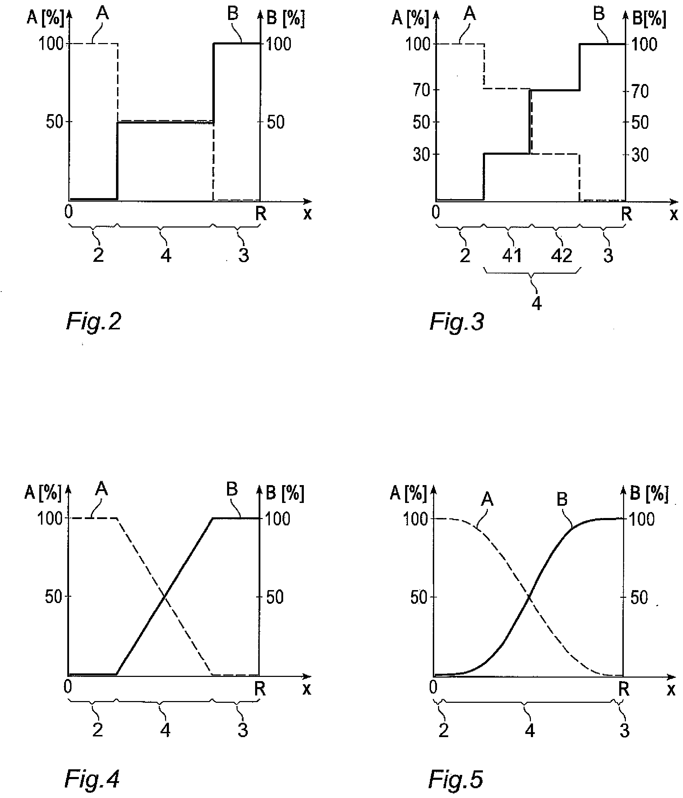

Figures 2 to 5 disclose examples of the material concentration of a cross section of a neutron absorbing component. The x-axis in the figures is a dimensional axis, where 0 denotes the center of the component and R denotes the outer periphery of the component. The y-axis of the figures denotes the material concentration for the component in percent for the first material, here denoted A and marked with a dotted line, and the second material, here denoted B and marked with a full line. In the figures, the core 2, the intermediate layer 4 and the layer 3 are designated along the x-axis of the figures.

Figure 2 discloses an example of a material concentration variation within a neutron absorbing component, where the intermediate layer 4 between the core 2 and the layer 3 has a material gradient that comprises a stepwise decrease of a concentration of a first material from the core to the layer, and a stepwise increase of the concentration of a second material from the core to the layer. In the example shown in figure 2, a decrease of the concentration of the first material from the core 2 to the intermediate layer 4 occurs in a stepwise manner, where the concentration of the first material decreases from essentially 100 % in the core 2 to essentially 50 % in the intermediate layer 4. The concentration of the first material is constant within the intermediate layer 4. Furthermore, a decrease of the concentration of a first material from the intermediate layer 4 to the layer 3 occurs stepwise from essentially 50 % to essentially 0 %. In the other way around, an increase of the concentration of the second material from the core 2 to the intermediate layer 4 occurs in a stepwise manner, where the concentration of the second material increases from mainly 0 % in the core to essentially 50 % in the intermediate layer. The concentration of the second material is constant within the intermediate layer 4. Furthermore, an increase of the concentration of the second material from the intermediate layer to the layer occurs stepwise from essentially 50 % to essentially 100 %.

Figure 3 discloses in the same way as figure 2 an example of a stepwise variation of the material concentration within a neutron absorbing component, with the difference that the intermediate layer 4 comprises two concentration areas, a first concentration area 41 and a second concentration area 42, with different concentrations of the first material and the second material. The concentration of the first material and the second material is constant within the first concentration area 41 and the second concentration area 42. In the example in figure 3, a decrease of the concentration of the first material from the core 2 to the intermediate layer 4 occurs in a stepwise manner, where the concentration of a first material decreases from essentially 100 % in the core 2 to essentially 70 % in the first concentration area 41 of the intermediate layer 4. Within the intermediate layer 4 a stepwise decrease of the concentration of the first material from the first concentration area 41 to the second concentration area 42 occurs, from essentially 70 % to essentially 30 %. A stepwise decrease of the concentration of the first material from the second concentration area 42 of intermediate layer 4 to the layer 3 occurs, from essentially 30 % to essentially 0 %. In the other way around, an increase of the concentration of the second material from the core 2 to the intermediate layer 4 occurs.

Figure 4 discloses an example of a material concentration variation within a neutron absorbing component, where the intermediate layer 4 between the core 2 and the layer 3 has a material gradient that comprises a successive decrease of the concentration of a first material from the core to the layer, and a successive increase of the concentration of the second material from the core to the layer. Within the intermediate layer 4, from the core 2 to the layer 3, a constant proportional decrease of the concentration of the first material occurs, from essentially 100 % to essentially 0 %. In the way around, an increase of the concentration of the second material within the intermediate layer occurs, from the core 2 to the layer 3, from essentially 0 %, to essentially 100 %.

Figure 5 discloses an example of a material concentration variation within a neutron absorbing component, where the intermediate layer 4 between the core 2 and the layer 3 has a material gradient that comprises a successive decrease of the concentration of a first material from the core 2 to the layer 3, and a successive increase of a concentration of a second material from the core 2 to the layer 3. In the example in figure 5, a decrease of a concentration of a first material from the core 2 to the intermediate layer 4 occurs in a successive manner. Within the intermediate layer 4 a gradually decrease of the concentration of a first material occurs, from essentially 100 % to essentially 0 %. The transition between the core 2 and the layer 3 can for example occur in a non-linear manner. On the other way around, an increase of a concentration of the second material from the core 2 occurs. In the disclosed example, the intermediate layer 4 forms a main part of a component, while the core 2 and the layer 3 form minor parts of a component.

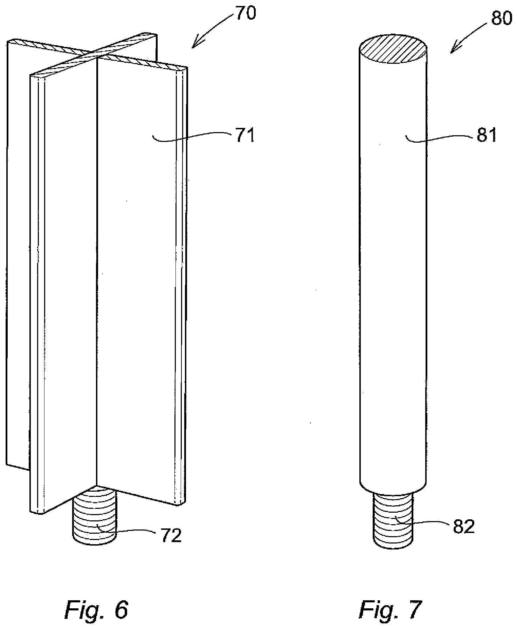

Figure 6 discloses an example of a control rod 70 in a perspective view in a boiling water reactor. The control rod 70 can be constructed from one or more sheet formed neutron absorbing components 71 with a core 2 that is partly enclosed by a layer 3. In the disclosed example the control rod 70 comprises four sheet formed neutron absorbing components 71. The components 71 are attached to each other and form the shape of a cross form that is attached at an attachment device 72. Control devices in the reactor, not shown in the figure, are being attached to the attachment device 72 for controlling to which degree the control rod 70 is inserted in the reactor.

Figure 7 discloses an example of a control rod 80 in a perspective view in a pressurized water reactor. The control rod 80 can be constructed from one or more cylindrical neutron absorbing components 81 with a core 2 that is partly enclosed by a layer 3. In the disclosed example, the control rod 80 comprises a cylindrical neutron absorbing components 81. The cylindrical component 81 is attached at an attachment device 82. Control devices in the reactor, not disclosed in the figure, are being attached to the attachment device 82 for enabling the control rod 80 to be inserted in the reactor.

Figure 8 discloses a cross section of an example of a tool for manufacturing of the neutron absorbing component. The disclosed tool can be used in any suitable sintering method for manufacturing the neutron absorbing component. Examples of suitable sintering methods that can be used for the invention are classical sintering technique, sintering at atmosphere pressure and elevated temperature, Cold Isostatic Pressing, Hot Isostatic Pressing, Spark Plasma Sintering, etc.

The tool for the method comprises a tool part with a space arranged to be fed with material for sintering. The tool part comprises a surrounding element 91. The surrounding element 91 encloses the above mentioned space. The space of the tool is divided by an inner pipe 98 which creates an inner part 99, in which the first material is fed that after sintering forms the core 2 of the component. The space of the tool is also divided by an outer pipe 94 which forms an outer part 93, in which the second material is fed that after sintering forms the layer 3 of the component. Between the outer pipe 94 and the inner pipe 98 an intermediate part 95 is formed in which a mixture of a first material and the second material can be fed that after sintering forms the intermediate layer 4 of the component. With such an arrangement of the tool, a component with material concentration variation in figure 2 can, for example, be achieved.

In the example in figure 8, the intermediate part 95 is divided into divisions of a intermediate pipe 96. The divisions in the intermediate part 95 are fed with mixtures of different proportions between the concentration of the first material and the second material. The mixtures are arranged in such a way that the layer formed after sintering obtains a material gradient that comprises a decrease of concentration of a first material from the core 2 to the layer 3 and an increase of a concentration of the second material from the core 2 to the layer 3, for example as shown in figure 3.

By means of above mentioned vibration of the first and the second material, the material concentration variation as shown in figure 4 and figure 5 can also be achieved by means of a tool arrangement that is shown in figure 8.

In an embodiment of the invention, the disclosed pipes 94, 96, 98 in figure 8 are pulled out of the space of the tool before the material in the space of the tool are being sintered together to the neutron absorbing component. Alternatively, the material in the space of the tool can before the sintering together be further brought together by vibrating the tool.

In an embodiment of the invention, the disclosed pipes 94, 96, 98 in figure 8 comprise a material that is evaporated during the sintering method. Thereby, the pipes 94, 96, 98 can remain in the space of the tool during the sintering method without affecting the ceramic composition of the neutron absorbing component.

In an embodiment of the invention, the disclosed pipes 94, 96, 98 in figure 8 are positioned so that a distance is formed to the bottom of the space of the tool. Thereby, the second material can be fed to the space of the tool so that it completely encloses the first material.

The invention is not limited to the disclosed embodiments but can be modified and varied within the scope of the proceeding claims.

## Claims

1. Neutron absorbing component (1), comprising a core (2) consisting of a first material and a layer (3) consisting of a second material, wherein the layer (3) at least partly encloses the core (2) and is adapted to protect the core (2) from an outer surrounding, wherein the first material has a higher neutron absorption capability than the second material, **characterized in**
**that** the component (1) is adapted to be used in fission reactors, that the neutron absorbing component (1) comprises an intermediate layer (4) between the core (2) and the layer (3),
**that** the intermediate layer (4) comprises the first material and the second material, and
**that** the intermediate layer (4) has a material gradient that comprises a decrease of the concentration of the first material from the core (2) to the layer (3) and an increase of the concentration of the second material from the core (2) to the layer (3).

2. Neutron absorbing component (1) according to claim 1, **characterized in that** the material gradient comprises a successive decrease of the concentration of the first material from the core (2) to the layer (3) and a successive increase of the concentration of the second material from the core (2) to the layer (3).

3. Neutron absorbing component (1) according to any of the previous claims, **characterized in that** the layer (3) is essentially impermeable to substances in gaseous state, at least helium.

4. Neutron absorbing component (1) according to any of the previous claims, **characterized in that** the layer (3) is essentially corrosion resistant in an environment of the fission reactor.

5. Neutron absorbing component (1) according to any of the previous claims, **characterized in that** the layer (3) has a porosity with a total pore volume that is greater or equal to zero, and that the core (2) has a porosity with a total pore volume that is greater than zero, wherein the pore volume of the porosity in the layer (3) is considerably less than the pore volume of the porosity in the core (2).

6. Neutron absorbing component (1) according to any of the previous claims, **characterized in that** the layer (3) comprises at least one of a metallic material and a ceramic material.

7. Neutron absorbing component (1) according to any of the previous claims, **characterized in that** the layer (3) consists of at least one substance chosen from the group of Ti, Zr, Al, Fe, Cr, Ni, SiC, SiN, ZrO₂, Al₂O₃, and mixture thereof, and of possible balance.

8. Neutron absorbing component (1) according to any of the previous claims, **characterized in that** the core (2) consists of at least one substance chosen from the group of Hf, B, In, Cd, Hg, Ag, Gd, Er, BₓC_{y}, BₓN_{y}, BₓO_{y}, and mixture thereof, and of possible balance.

9. Neutron absorbing component (1) according to any of the previous claims, **characterized in that** the component (1) is adapted to be located in a control rod, wherein the layer (3) completely encloses the core (2).

10. Neutron absorbing component (1) according to claim 9, **characterized in that** the control rod is arranged to be used in a light water fission reactor of the type boiling water reactor,

11. Neutron absorbing component (1) according to claim 10, **characterized in that** the control rod is constructed from at least one sheet formed neutron absorbing component.

12. Neutron absorbing component (1) according to claim 9, **characterized in that** the control rod is arranged to be used in a light water fission reactor of the type pressurized water reactor.

13. Neutron absorbing component (1) according to claim 12, **characterized in that** the control rod is constructed from at least a cylinder shaped neutron absorbing component.

14. Method for manufacturing of a neutron absorbing component according to any of claims 1 - 13, wherein the method comprises the steps of:
feeding the first material in powder form and the second material in powder form to a space of a tool in such a way that the second material at least partly encloses the first material,
sintering together the first material and the second material to the neutron absorbing component, so that the intermediate layer between the core and the layer is formed,
wherein at feeding of the first material and the second material an intermediate zone is formed between an inner part of the space and an outer part of the space, and wherein the intermediate zone comprises a decrease of the concentration of the first material from the inner part of the space to outer part of the space and an increase of a concentration of the second material from the inner part of the space to the outer part of the space.

15. Method according to claim 14, wherein the space is vibrated in such a way that the first material and the second material are brought together and form the intermediate zone.

16. Method according to any of claims 14 and 15, wherein
the space is divided by an inner pipe that comprises the inner part,
the space is divided by an outer pipe that comprises the outer part, wherein an intermediate part is formed between the outer pipe and the inner pipe, and
the intermediate part is fed with a mixture of the first and the second material for forming the intermediate zone.

17. Method according to claim 16, wherein the intermediate part is divided into divisions of at least an intermediate located pipe, wherein the divisions are fed with mixtures of different proportions between the concentration of the first material and the second material.

## Patentansprüche

1. Neutronenabsorbierendes Bauteil (1), umfassend einen Kern (2), bestehend aus einem ersten Material, und eine Schicht (3), bestehend aus einem zweiten Material, wobei die Schicht (3) den Kern (2) zumindest teilweise umschließt und angepasst ist, um den Kern (2) vor einer äußeren Umgebung zu schützen, wobei das erste Material ein höheres Neutronenabsorptionsvermögen als das zweite Material besitzt, **dadurch gekennzeichnet, dass** das Bauteil (1) angepasst ist, um in Kernspaltungsreaktoren verwendet zu werden, dass das neutronenabsorbierende Bauteil (1) eine Zwischenschicht (4) zwischen dem Kern (2) und der Schicht (3) umfasst,
dass die Zwischenschicht (4) das erste Material und das zweite Material umfasst, und
dass die Zwischenschicht (4) einen Materialgradienten aufweist, der eine Abnahme der Konzentration des ersten Materials von dem Kern (2) zu der Schicht (3) und eine Zunahme der Konzentration des zweiten Materials von dem Kern (2) zu der Schicht (3) umfasst.

2. Neutronenabsorbierendes Bauteil (1) nach Anspruch 1, **dadurch gekennzeichnet, dass** der Materialgradient eine sukzessive Abnahme der Konzentration des ersten Materials von dem Kern (2) zu der Schicht (3) und eine sukzessive Zunahme der Konzentration des zweiten Materials von dem Kern (2) zu der Schicht (3) umfasst.

3. Neutronenabsorbierendes Bauteil (1) nach einem der vorangehenden Ansprüche, **dadurch gekennzeichnet, dass** die Schicht (3) im Wesentlichen undurchlässig für Stoffe im gasförmigen Zustand, zumindest Helium, ist.

4. Neutronenabsorbierendes Bauteil (1) nach einem der vorangehenden Ansprüche, **dadurch gekennzeichnet, dass** die Schicht (3) im Wesentlichen korrosionsbeständig in einer Umgebung des Kernspaltungsreaktors ist.

5. Neutronenabsorbierendes Bauteil (1) nach einem der vorangehenden Ansprüche, **dadurch gekennzeichnet, dass** die Schicht (3) eine Porosität mit einem Gesamtporenvolumen, das größer oder gleich null ist, aufweist, und dass der Kern (2) eine Porosität mit einem Gesamtporenvolumen, das größer als null ist, aufweist, wobei das Porenvolumen der Porosität in der Schicht (3) wesentlich kleiner als das Porenvolumen der Porosität in dem Kern (2) ist.

6. Neutronenabsorbierendes Bauteil (1) nach einem der vorangehenden Ansprüche, **dadurch gekennzeichnet, dass** die Schicht (3) mindestens eines von einem metallischen Material und einem keramischen Material umfasst.

7. Neutronenabsorbierendes Bauteil (1) nach einem der vorangehenden Ansprüche, **dadurch gekennzeichnet, dass** die Schicht (3) aus mindestens einem Stoff, ausgewählt aus der Gruppe von Ti, Zr, Al, Fe, Cr, Ni, SiC, SiN, ZrO₂, Al₂O₃, und einem Gemisch davon, und aus einem möglichen Rest besteht.

8. Neutronenabsorbierendes Bauteil (1) nach einem der vorangehenden Ansprüche, **dadurch gekennzeichnet, dass** der Kern (2) aus mindestens einem Stoff, ausgewählt aus der Gruppe von Hf, B, In, Cd, Hg, Ag, Gd, Er, BₓC_{y}, BₓN_{y}, BₓO_{y}, und einem Gemisch davon, und aus einem möglichen Rest besteht.

9. Neutronenabsorbierendes Bauteil (1) nach einem der vorangehenden Ansprüche, **dadurch gekennzeichnet, dass** das Bauteil (1) angepasst ist, um sich in einem Regelstab zu befinden, wobei die Schicht (3) den Kern (2) vollständig umschließt.

10. Neutronenabsorbierendes Bauteil (1) nach Anspruch 9, **dadurch gekennzeichnet, dass** der Regelstab angeordnet ist, um in einem Leichtwasserreaktor vom Siedewasserreaktortyp verwendet zu werden.

11. Neutronenabsorbierendes Bauteil (1) nach Anspruch 10, **dadurch gekennzeichnet, dass** der Regelstab aus mindestens einem plattenförmigen neutronenabsorbierenden Bauteil aufgebaut ist.

12. Neutronenabsorbierendes Bauteil (1) nach Anspruch 9, **dadurch gekennzeichnet, dass** der Regelstab angeordnet ist, um in einem Leichtwasserreaktor vom Druckwasserreaktortyp verwendet zu werden.

13. Neutronenabsorbierendes Bauteil (1) nach Anspruch 12, **dadurch gekennzeichnet, dass** der Regelstab aus mindestens einem zylinderförmigen neutronenabsorbierenden Bauteil aufgebaut ist.

14. Verfahren zur Herstellung eines neutronenabsorbierenden Bauteils nach einem der Ansprüche 1-13, wobei das Verfahren die folgenden Schritte umfasst:
Zuführen des ersten Materials in Pulverform und des zweiten Materials in Pulverform zu einem Raum einer Vorrichtung derart, dass das zweite Material das erste Material zumindest teilweise umschließt,
Zusammensintern des ersten Materials und des zweiten Materials zu dem neutronenabsorbierenden Bauteil, sodass die Zwischenschicht zwischen dem Kern und der Schicht ausgebildet wird,
wobei beim Zuführen des ersten Materials und des zweiten Materials eine intermediäre Zone zwischen einem inneren Teil des Raums und einem äußeren Teil des Raums ausgebildet wird, und wobei die intermediäre Zone eine Abnahme der Konzentration des ersten Materials von dem inneren Teil des Raums zu dem äußeren Teil des Raums und eine Zunahme der Konzentration des zweiten Materials von dem inneren Teil des Raums zu dem äußeren Teil des Raums umfasst.

15. Verfahren nach Anspruch 14, wobei der Raum so gerüttelt wird, dass das erste Material und das zweite Material zusammengebracht werden und die intermediäre Zone ausbilden.

16. Verfahren nach einem der Ansprüche 14 und 15, wobei der Raum durch ein inneres Rohr, das den inneren Teil umfasst, aufgeteilt wird,
der Raum durch ein äußeres Rohr, das den äußeren Teil umfasst, aufgeteilt wird, wobei ein intermediärer Teil zwischen dem äußeren Rohr und dem inneren Rohr ausgebildet wird, und der intermediäre Teil mit einem Gemisch aus dem ersten und dem zweiten Material zur Ausbildung der intermediären Zone gefüllt wird.

17. Verfahren nach Anspruch 16, wobei der intermediäre Teil in Bereiche des mindestens einen dazwischenliegenden Rohrs aufgeteilt wird, wobei die Bereiche mit Gemischen mit unterschiedlichen Verhältnissen zwischen der Konzentration des ersten Materials und des zweiten Materials gefüllt werden.

## Revendications

1. Composant absorbant les neutrons (1), comprenant un coeur (2) constitué d'un premier matériau et une couche (3) constituée d'un second matériau, dans lequel la couche (3) entoure au moins partiellement le coeur (2) et est adaptée pour protéger le coeur (2) d'un environnement extérieur, dans lequel le premier matériau présente une capacité d'absorption des neutrons supérieure à celle du second matériau, **caractérisé**
**en ce que** le composant (1) est adapté pour être utilisé dans des réacteurs de fission,
**en ce que** le composant absorbant les neutrons (1) comprend une couche intermédiaire (4) entre le coeur (2) et la couche (3),
**en ce que** la couche intermédiaire (4) comprend le premier matériau et le second matériau, et
**en ce que** la couche intermédiaire (4) présente un gradient de matériau qui comprend une diminution de la concentration du premier matériau du coeur (2) à la couche (3) et une augmentation de la concentration du second matériau du coeur (2) à la couche (3).

2. Composant absorbant les neutrons (1) selon la revendication 1, **caractérisé en ce que** le gradient de matériau comprend une diminution successive de la concentration du premier matériau du coeur (2) à la couche (3) et une augmentation successive de la concentration du second matériau du coeur (2) à la couche (3).

3. Composant absorbant les neutrons (1) selon l'une quelconque des revendications précédentes, **caractérisé en ce que** la couche (3) est essentiellement imperméable aux substances dans un état gazeux, au moins à l'hélium.

4. Composant absorbant les neutrons (1) selon l'une quelconque des revendications précédentes, **caractérisé en ce que** la couche (3) est essentiellement résistante à la corrosion dans un environnement du réacteur de fission.

5. Composant absorbant les neutrons (1) selon l'une quelconque des revendications précédentes, **caractérisé en ce que** la couche (3) a une porosité présentant un volume total de pores qui est supérieur ou égal à zéro, et **en ce que** le coeur (2) a une porosité présentant un volume total de pores qui est supérieur à zéro, dans lequel le volume de pores de la porosité dans la couche (3) est considérablement inférieur au volume de pores de la porosité dans le coeur (2).

6. Composant absorbant les neutrons (1) selon l'une quelconque des revendications précédentes, **caractérisé en ce que** la couche (3) comprend au moins l'un d'un matériau métallique et d'un matériau céramique.

7. Composant absorbant les neutrons (1) selon l'une quelconque des revendications précédentes, **caractérisé en ce que** la couche (3) est constituée d'au moins une substance choisie dans le groupe constitué de Ti, Zr, Al, Fe, Cr, Ni, SiC, SiN, ZrO₂, Al₂O₃, et de leurs mélanges, et d'éventuelles substances supplémentaires.

8. Composant absorbant les neutrons (1) selon l'une quelconque des revendications précédentes, **caractérisé en ce que** le coeur (2) est constitué d'au moins une substance choisie dans le groupe constitué de Hf, B, In, Cd, Hg, Ag, Gd, Er, BₓC_{y}, BₓN_{y}, BₓO_{y}, et de leurs mélanges, et d'éventuelles substances supplémentaires.

9. Composant absorbant les neutrons (1) selon l'une quelconque des revendications précédentes, **caractérisé en ce que** le composant (1) est adapté pour être placé dans une barre de commande, dans lequel la couche (3) entoure complètement le coeur (2).

10. Composant absorbant les neutrons (1) selon la revendication 9, **caractérisé en ce que** la barre de commande est agencée pour être utilisée dans un réacteur de fission à eau légère du type réacteur à eau bouillante.

11. Composant absorbant les neutrons (1) selon la revendication 10, **caractérisé en ce que** la barre de commande est construite à partir d'au moins un composant absorbant les neutrons sous forme de feuille.

12. Composant absorbant les neutrons (1) selon la revendication 9, **caractérisé en ce que** la barre de commande est agencée pour être utilisée dans un réacteur de fission à eau légère du type réacteur à eau sous pression.

13. Composant absorbant les neutrons (1) selon la revendication 12, **caractérisé en ce que** la barre de commande est construite à partir d'au moins un composant absorbant les neutrons en forme de cylindre.

14. Procédé de fabrication d'un composant absorbant les neutrons selon l'une quelconque des revendications 1 à 13, dans lequel le procédé comprend les étapes de :
introduction du premier matériau sous forme de poudre et du second matériau sous forme de poudre dans un espace d'un outil de manière à ce que le second matériau entoure au moins partiellement le premier matériau,
le frittage conjoint du premier matériau et du second matériau pour former le composant absorbant les neutrons, de sorte que la couche intermédiaire entre le coeur et la couche soit formée,
dans lequel au moment de l'introduction du premier matériau et du second matériau une zone intermédiaire soit formée entre une partie interne de l'espace et une partie externe de l'espace, et dans lequel la zone intermédiaire comprend une diminution de la concentration du premier matériau de la partie interne de l'espace à la partie externe de l'espace et une augmentation d'une concentration du second matériau de la partie interne de l'espace à la partie externe de l'espace.

15. Procédé selon la revendication 14, dans lequel l'espace est soumis à des vibrations de manière à ce que le premier matériau et le second matériau soient assemblés et forment la zone intermédiaire.

16. Procédé selon l'une quelconque des revendications 14 et 15, dans lequel
l'espace est subdivisé par un tube interne qui comprend la partie interne,
l'espace est subdivisé par un tube externe qui comprend la partie externe, dans lequel une partie intermédiaire est formée entre le tube externe et le tube interne, et
la partie intermédiaire est alimentée en un mélange du premier et du second matériau pour former la zone intermédiaire.

17. Procédé selon la revendication 16, dans lequel la partie intermédiaire est subdivisée en sections d'au moins un tube à un emplacement intermédiaire, dans lequel les sections sont alimentées en mélanges de différentes proportions entre la concentration du premier matériau et du second matériau.
